# EUROPEAN PATENT APPLICATION

(11) **EP 4 254 580 A1**
(43) Date of publication of application: **04.10.2023**
(21) Application number: 23164405.5
(22) Date of filing: 27.03.2023
(51) Int. Cl.: H01M 10/04

(54) **ELECTRODE PLATE STACKING APPARATUS HAVING PIVOTAL UNWINDER FOR SEPARATOR**

(30) Priority: 28.03.2022 KR 20220038319
(71) Applicant: Innometry Co., Ltd., Hwaseong-si Gyeonggi-do (KR)
(72) Inventor: Shin, Hyuk, 18482 Gyeonggi-do (KR); Hong, Nam Hyeong, 18392 Gyeonggi-do (KR); Yeom, Cheol Won, 18109 Gyeonggi-do (KR)
(74) Representative: Reiser & Partner Patentanwälte mbB

(57) **Abstract**

A separator unwinder actuated pivotally to an electrode plate stacking apparatus with a stationary stack base is provided. A positive electrode plate and a negative electrode plate are stacked alternately onto the stack surface of the stack base, and a separator is provided therebetween. The electrode plates are stacked onto the stack base from right and left sides of the stack base. The separator drawn from a separator roll reachs the stack base through a plurality of rollers. The separator covers the electrode plate placed on the stack surface of the stack base by the pivotal unwinder. In such manner, the separator can be supplied rapidly and stably.

## Description

### FIELD

The present invention relates to an electrode plate stacking apparatus for manufacturing a zigzag-type battery cell and method for the same.

### BACKGROUND

A chemical cell, in general, is a cell composed of a pair of electrodes of a positive electrode plate and a negative electrode plate, and an electrolyte. The amount of energy that can be stored in a chemical cell varies depending on the material constituting the electrodes and the electrolyte. These chemical batteries are classified into primary batteries that are used only for one-time discharge due to the very slow charging reaction, and secondary batteries that can be reused through repetitive charging and discharging.

Because of its advantages, a secondary battery is being applied to various technical fields throughout the industry, and is not only widely used as an energy source for mobile communication devices such as smartphones, but also as an energy source for electric vehicles.

Such a secondary battery is formed in a form in which a positive electrode plate, a separator, and a negative electrode plate are sequentially stacked and immersed in an electrolyte. There are two methods of manufacturing the internal cell of such a secondary battery.

For small secondary batteries, a method of arranging a negative electrode plate and a positive electrode plate on separators and manufacturing them in a jelly-roll form is widely used, while, for medium to large batteries having more electric capacity, a method in which a negative electrode plate and a positive electrode plate are stacked with a separator in an appropriate order is widely used.

In the zigzag type (also refered to as 'z-folding type') stacking method widely used among the methods of manufacturing a secondary battery cell stack, the separator forms a zigzag folded form, and the negative electrode plate and the positive electrode plate are alternately stacked in an inserted form.

Various schemes are known as a method of supplying a separator onto a stack base on which an electrode plate is stacked.

Korean Patent Application Publication No. 10-2009-0030175 (published on March 24, 2009) discloses that a positive or negative electrode plate is transferred to an alignment tray by a transfer robot, and is aligned in the alignment tray and then transferred to a stack tray. When the stack tray horizontally moves left and right, the separator is unwound onto the stack tray to cover the positive electrode plate or the negative electrode plate. This process is repeated such that the electrode plates are stacked while a separator is interposed between the electrode plates.

In the method of moving the stack base between the stacking position of the positive electrode plate and the stacking position of the negative electrode plate as described above, a speed limit due to the movement of the stack base is generated. Since the horizontally moving stack base moves in the order of movement-stop-opposite movement, if its moving speed is increased, the inertial force is increased as well by acceleration. Thus, when the stack base stops, the force applied to the portion of the separator gripped by a gripper is increased. This may cause damage to the separator, and thus the moving speed of the stack base should be limited not to exceed a predetermined level.

### SUMMARY OF THE INVENTION

### PROBLEM TO BE SOLVED

The purpose of the present invention is to provide an apparatus and a method for stacking electrode plates, which can quickly stack a separator with a simple structure.

The purpose of the present invention is to provide an apparatus and a method for stacking electrode plates with a new concept capable of stacking a separator without moving a stack base.

The purpose of the present invention is to provide a separator unwinding assembly capable of quickly stacking a separator with a simple structure.

The purpose of the present invention is to provide a new concept separator unwinding assembly capable of stacking a separator without moving a stack base.

The problems to be solved by the present invention are not limited to the above-mentioned problems, and other problems not mentioned can be clearly understood by a person having ordinary skill in the art from the following description.

### SOLUTION TO SOLVE PROBLEM

The apparatus and method for stacking electrode plates having a separator unwinding assembly, and the separator unwinding assembly according to the present invention for achieving the above objects include the following aspects and any combination thereof.

One aspect of the present invention is an apparatus for stacking electrode plates for a prismatic secondary battery, wherein a positive electrode plate and a negative electrode plate are alternately supplied on a stack base while a separator is supplied between the positive electrode plate and the negative electrode plate, comprising: a separator unwinding assembly configured to cover an electrode plate placed on the stack base with the separator, wherein the separator unwinding assembly comprises two or more arms; a shaft pivotally connected to one end of the arm; two or more rollers coupled to the other end of the arm; and an actuator for pivotally moving the arms.

Another aspect of the present invention, in addition the above aspect, is the apparatus for stacking electrode plates in which the two or more rollers are configured to be extended between the other ends of the two or more arms.

Another aspect of the present invention, in addition to the above aspect, is the apparatus for stacking electrode plates in which the shaft is arranged below a stack surface of the stack base.

Another aspect of the present invention, in addition to the above aspect, is the apparatus for stacking electrode plates in which the two or more rollers are provided with the separator above the stack surface of the stack base and the separator is fed between the two or more rollers.

Another aspect of the present invention, in addition to the above aspect, is the apparatus for stacking electrode plates in which the stack base is stationary.

Another aspect of the present invention is a separator unwinding assembly used for an apparatus for stacking electrode plates for a prismatic secondary battery, wherein a positive electrode plate and a negative electrode plate are alternately supplied on a stack base while a separator is supplied between the positive electrode plate and the negative electrode plate, comprising: two or more arms; a shaft pivotally connected to one end of the arm; two or more rollers coupled to the other end of the arm; and an actuator for pivotally moving the arms, wherein the assembly is configured to cover an electrode plate placed on the stack base with the separator.

Another aspect of the present invention, in addition to the above aspect, is the separator unwinding assembly in which the two or more rollers are configured to be extended between the other ends of the two or more arms.

Another aspect of the present invention, in addition to the above aspect, is the separator unwinding assembly in which the shaft is arranged below a stack surface of the stack base.

Another aspect of the present invention, in addition to the above aspect, is the separator unwinding assembly in which the two or more rollers are provided with the separator above the stack surface of the stack base and the separator is fed between the two or more rollers.

Another aspect of the present invention, in addition to the above aspect, is the separator unwinding assembly in which the stack base is stationary.

Another aspect of the present invention is a method for stacking electrode plates for a prismatic secondary battery, wherein a positive electrode plate and a negative electrode plate are alternately supplied on a stack base while a separator is supplied between the positive electrode plate and the negative electrode plate, comprising: providing a separator onto the stack base with a separator unwinding assembly, wherein the assembly comprises two or more arms; a shaft pivotally connected to one end of the arm; two or more rollers coupled to the other end of the arm; and an actuator for pivotally moving the arms, wherein the two or more arms move pivotally about the shaft by a predetermined angle so that the separator drawn between the two or more rollers covers the electrode plate placed on the stack base.

Another aspect of the present invention, in addition to the above aspect, is the method for stacking electrode plates in which the two or more rollers are configured to be extended between the other ends of the two or more arms.

Another aspect of the present invention, in addition to the above aspect, is the method for stacking electrode plates in which the shaft is arranged below a stack surface of the stack base.

Another aspect of the present invention, in addition to the above aspect, is the method for stacking electrode plates in which the two or more rollers are provided with the separator above the stack surface of the stack base and the separator is fed between the two or more rollers.

Another aspect of the present invention, in addition to the above aspect, is the method for stacking electrode plates in which the stack base is stationary.

### EFFECTS OF THE INVENTION

According to the apparatus and the method for stacking electrode plates of the present invention, a separator can be drawn on a stack base by a simple structure.

In addition, according to the electrode plate stacking apparatus and method of the present invention, the stacking speed of the separator can be maximally increased.

In addition, according to the electrode plate stacking apparatus and method of the present invention, the separator can be stably stacked without damage.

The effects of the present invention are not limited to the effects mentioned above, and other effects not mentioned can be clearly understood by a person having ordinary skill in the art from the following description.

### BRIEF DESCRIPTION OF THE DRAWINGS

FIG. 1 is a perspective view illustrating an electrode plate stacking apparatus according to an embodiment of the present invention.
FIG. 2 is a front view of an electrode plate stacking apparatus according to an embodiment of the present invention.
FIG. 3 is a view illustrating a state in which a front surface of the electrode plate stacking apparatus according to an embodiment of the present invention is inclined forward.
FIG. 4 illustrates a separator unwinder assembly according to an embodiment of the present invention.
FIG. 5 is a view illustrating functionally categorized parts of an electrode plate stacking apparatus according to an embodiment of the present invention.
FIG. 6 schematically illustrates a configuration of covering an electrode plate with a separator according to an embodiment of the present invention.
FIG. 7 schematically illustrates an order in which electrode plates and a separator are stacked according to an embodiment of the present invention.

### DETAILED DESCRIPTION OF THE INVENTION

The embodiments shown in the attached drawings are for a clear understanding of the present invention, and the present invention is not limited thereto.

In the following description, components having the same reference numerals in different drawings have similar functions, so that they will not be described repeatedly unless necessary for an understanding of the invention. The known components will be briefly described or omitted. However, it should not be understood as being excluded from the examples.

Also, the terminology used in the present application is used to describe a specific embodiment, and is not intended to limit the present invention. The expression of the singular includes a plurality of representations, unless the context clearly indicates otherwise. It will be further understood that the terms "comprise," "have" and so forth specify the presence of stated a feature, integer, step, operation, element, or component described in this specification, but do not preclude the presence or addition of one or more other feature, integer, step, operation, element, component, or combination thereof.

Unless otherwise defined, all terms used herein, including technical or scientific terms, have the same meaning as commonly understood by one of ordinary skill in the art to which the present invention pertains. Such terms as those defined in commonly used dictionaries should be interpreted as having a meaning that is consistent with their meaning in the context of the relevant art, and are not to be interpreted in an idealized or overly formal sense unless expressly so defined herein.

When a component is referred to as being "connected" or "coupled" to another component, it should be understood that there may be another component in the middle, although it may be directly connected or coupled to the other component. On the other hand, when a component is referred to as being "directly connected" or "directly coupled" to another component, it should be understood that there is no other component in the middle.

Hereinafter, the present invention will be described in detail with reference to the accompanying drawings.

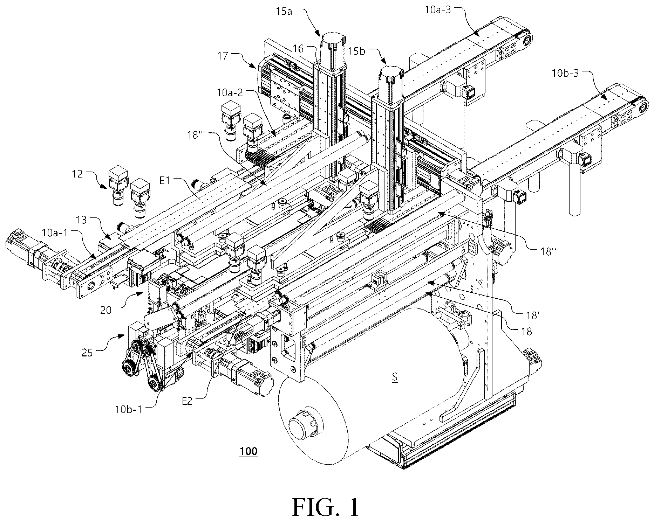

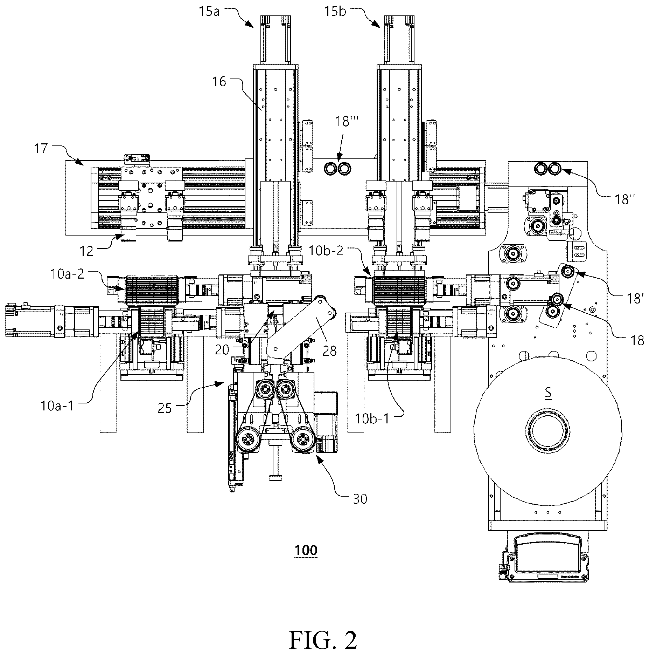

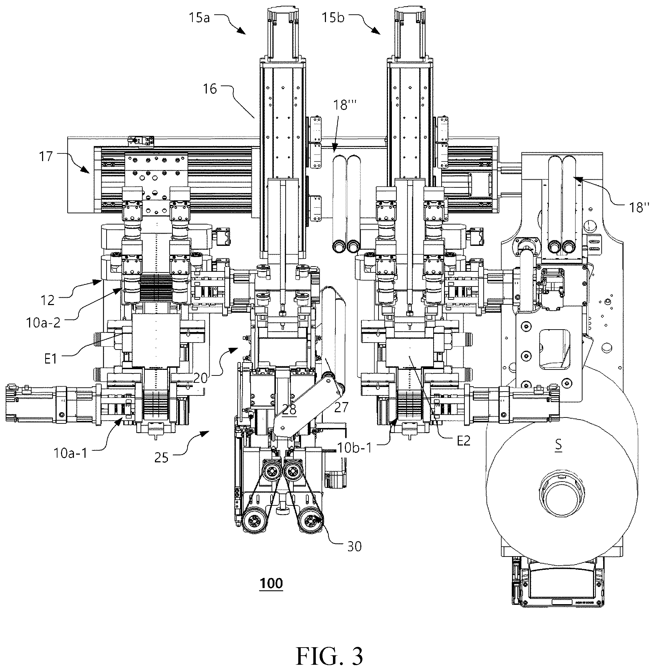

FIGS. 1 to 3 illustrate an electrode plate stacking apparatus 100 according to an embodiment of the present invention. A plurality of belt conveyors 10a-1, 10a-2, 10a-3 for transferring the negative electrode plate E1 are arranged in a row to form a supply path for negative electrode plates, and a plurality of belt conveyors 10b-1, 10b-2, 10b-3 for transferring the positive electrode plate E2 are arranged in a line to form a supply path for positive electrode plates. The electrode plates E1, E2 may be rectangular shaped to constitute a prismatic battery cell.

The belt conveyor can fix the electrode plate thereon by applying a vacuum suction force through vacuum holes formed in the belt. Of course, it is also possible to transfer the electrode plate with any other mechanism that is not in the form of a belt conveyor.

The belt conveyors 10a-1, 10b-1 disposed alongside of the stack base 20, which is a stacking section of the electrode plates, can also function as electrode plate alignment units. A camera 12 and a backlight 13 corresponding to the camera 12 can be respectively installed above and below four corners of the electrode plates E1, E2 which are vacuum-attached on the belt conveyors 10a-1, 10b-1 so as to identify whether the corresponding corners of the electrode plate are positioned correctly. The position of the belt conveyors 10a-1, 10b-1 can be adjusted in XYθ direction by an XYθ movement module mounted on the bottom of the belt conveyor 10a-1, 10b-1 according to the result of identifying the position of the electrode plate, thereby aligning the electrode plate to the correct position. For example, X may be a direction perpendicular to a running direction of the belt conveyor, Y may be a direction parallel to the running direction of the belt conveyor, and θ may be a rotational direction.

The aligned electrode plates E1, E2 are stacked by being placed on the stack base 20 by pick-and-place (P/P) units 15a, 15b. The stack base 20 is stationary. The P/P units 15a, 15b can be provided with a vertical actuator 16 and a horizontal actuator 17 to adsorb and unload the electrode plate E1, E2 from the belt conveyor 10a-1, 10b-1 and then release and load it on the stack base 20 by a combination of horizontal movement and vertical movement. By varying the strength of adsorption force or blowing air on either of the P/P units 15a, 15b and the belt conveyor, an electrode plate can be adsorbed or released. Of course, it is also possible to employ a P/P unit that operates in a different manner.

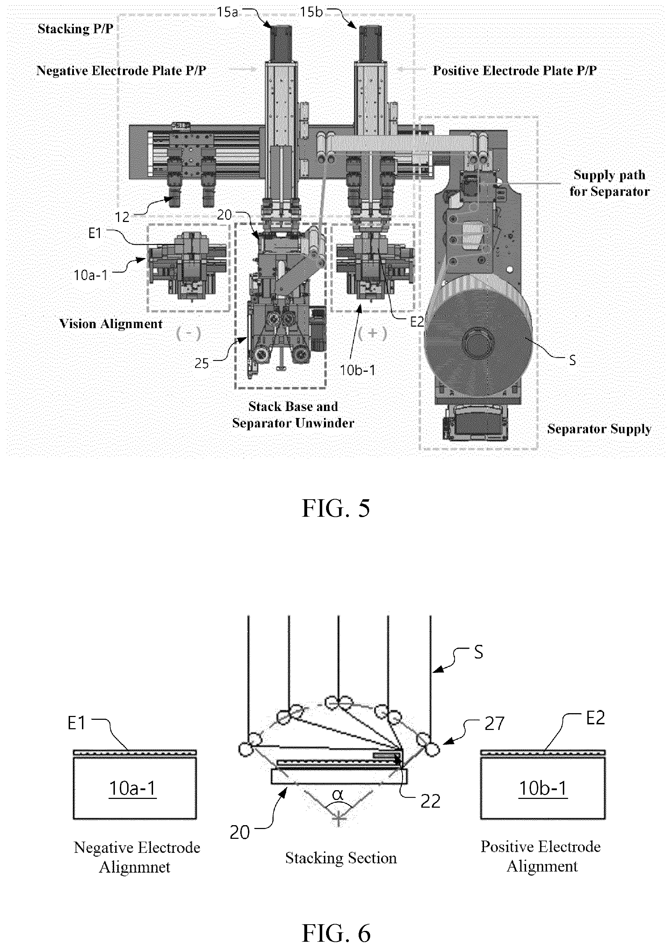

A separator S provided in a roll shape can be supplied onto the stack base 20 via a plurality of rollers 18, 18', 18", 18‴, ..., 27. These rollers may include a dancer roller. For simplicity, reference numerals are omitted for some rollers (a supply path of a separator according to an embodiment of the present invention is shown in FIG. 5). When the separator S is supplied to the stack base 20, grippers 22 fix it on the stack base, and then, an electrode plate E1 or E2 is stacked thereon.

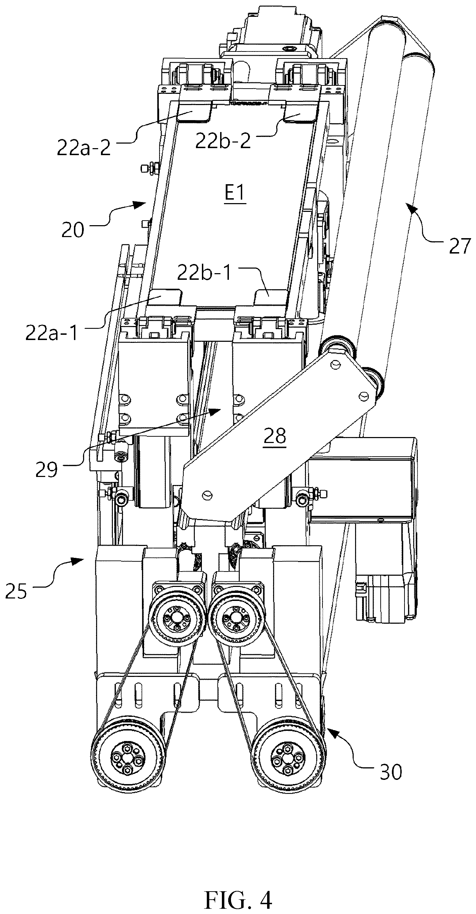

A separator unwinding assembly 25 is provided to cover the separator S over the stacked electrode plates E1 or E2. Referring to FIG. 4, the separator unwinding assembly 25 includes two arms 28 oppositely disposed near the sides of the stack base 20, a pair of rollers 27 coupled to extend between the two arms 28, a shaft 29 coupled to extend between the two arms 28 at an end of of the arm 28 opposite to the end of the arm 28 to which the rollers 27 are coupled, and a driving unit 30 comprising an actuator, such as a motor, associated with a belt-pulley combination.

The driving unit 30 is configured to pivot the arm 28 by a predetermined angle around a virtual axis passing through the shaft 29 or the center of the shaft 29. The arm 28 may have any shape capable of being pivoted about the shaft 29, such as a bar shape and a plate shape.

Hereinafter, an operation of the electrode plate stacking apparatus 100 according to an embodiment of the present invention will be described.

Referring to FIG. 5, a negative electrode plate E1 is stacked from the left side of a stack base 20, and a positive electrode plate E2 is stacked on a stack base 20 from the right side thereof. The electrode plates adsorbed on the actuator or pick-and-place unit (P/P) 15a, 15b are moved in a vertical rise-horizontal movement-vertical descending order to be placed on the stack base 20. The two P/P 15a, 15b can be moved together such that a predetermined distance is always maintained when moving in the horizontal direction. In this case, one P/P can unload an electrode plate from the electrode plate transfer units 10a-1, 10b-1 while the other P/P loads another electrode plate on the stack base, thereby shortening the stacking time.

Each of the electrode plates E1, E2 can be continuously supplied from a magazine (not shown) by means of a vacuum belt conveyor 10a-1, 10a-2, 10a-3; 10b-1, 10b-2, 10b-3.

The electrode plate may be aligned using a vision sensor 12 before being adsorbed to the P/P 15a, 15b. The separator S may be supplied from the separator roll along a supply path via a plurality of rollers.

A pivotal unwinder 25 with a pair of rollers has its pivot center on the lower side of the stacking surface of the stack base 20, and like a vehicle wiper, the separator S interposed between a pair of rollers is withdrawn to cover the electrode plate.

Referring to FIG. 4, the separator S slides through a plurality of rollers 18, 18 ', 18 ", 18 ", ... arranged along the separator supply path, and then is withdrawn onto a stack base 20 through the gap between a pair of rollers 27. The grippers 22a-1, 22a-1, 22b-1, 22b-2 can press and fix the separator S onto the stack base 20.

As shown in FIG. 4, when the roller 27 is pivoted to the right side of the stack base 20, the negative electrode plate E1 is stacked on the separator S placed on the stack base 20 drawn through the gap between the rollers 27, and the right grippers 22b-1 and 22b-2 grip the right two corners of the electrode plate E1. Subsequently, the arm 28 is pivoted to move to the left side of the stack base 20, and the separator S is drawn to cover the negative electrode plate E1 just stacked on the stack base 20. Then, the positive electrode plate E2 is stacked thereon, the left grippers 22a-1, 22a-2 grip the left two corners of the electrode plate E2. The arm 28 is then pivoted back to the right. While the above processes are repeated, the negative electrode, the separator, and the positive electrode are sequentially stacked, and the separator forms a zigzag type.

FIG. 6 shows a state in which the negative electrode plate E1 transferred from the left side of the stack base 20 is placed on the stack base 20. The right gripper 22 presses and fixes the edges of the negative electrode plate E1 and the separator S placed beneath the negative electrode plate E1. The arm 28 of the pivotal unwinder 25 and the roller 27 coupled thereto are then pivoted to the left by a predetermined angle α. During this process, the separator S is drawn out through the gap between the pair of rollers 27 to cover the negative electrode plate E1 just placed on the stack base. The pivot angle α of the arm 28 or the roller 27 may be different depending on the size of the electrode plate being stacked, but when pivoted as much, the roller 27 must be set to deviate from the downward path of the subsequent electrode plate. Preferably, the pivot angle α is set such that the separator is sufficiently close to the stack surface of the stack base so that the separator and the electrode plate are easily gripped by the gripper.

Thereafter, when the positive electrode plate E2 on the right side of the stack base 20 is stacked on the stack base by the P/P unit, a separator supply operation is performed in the order of fixing by the left grippers and the right-side pivot movement of the unwinder 25. A zigzag type battery cell can be manufactured by repeating the above steps.

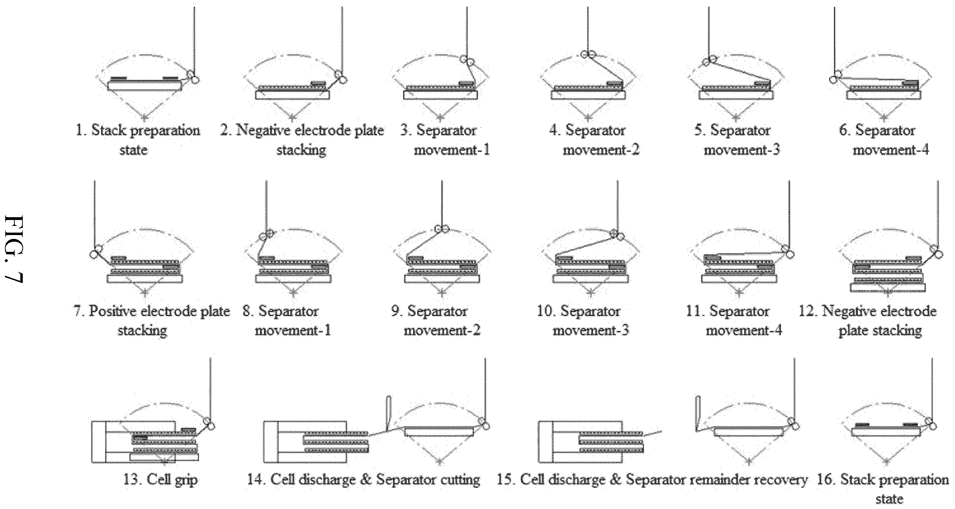

Hereinafter, the entire process of stacking the electrode plates by using the electrode plate stacking apparatus 100 having the separator unwinding unit 25 according to the present invention will be described with reference to FIG. 7.

In "1. Stack preparation state," the central rectangle represents the stack base, the fan shape represents the pivot range of the pivotal unwinder, and the cross shape at the lower end represents the center of the pivot motion. A separator is laid over the stack base through the rollers of the pivotal unwinder. In "2. Negative electrode plate stacking," a negative electrode plate is stacked and the right gripper fixed the electrode plate. From "3. Separator movement-1" to "6. Separator movement-4," a moving path of the separator according to the pivotal movement of the unwinder is shown. In this way, the separator is covered over the negative electrode plate. Subsequently, from "7. Positive electrode plate stacking" to "11. Separator movement-4," a positive electrode plate is stacked and the left gripper fixes the electrode plate, and then, the unwinder pivots in the opposite direction to move the separator. In "12. Negative electrode plate stacking," another negative electrode plate is stacked. For the sake of simplicity, operations after electrode plate stacking are shown from "13. Cell grip," but in practice, a cell grip will be performed after a necessary number of electrode plates are stacked.

The above-mentioned FIG. 6 corresponds to "3. Separator movement-1" through "6. Separator movement-4" of FIG. 7 displayed at a time.

As described above, according to the present invention, a separator unwinder which is pivotally operated in an electrode plate stacking apparatus with a stationary stack base is provided. A positive electrode plate and a negative electrode plate are stacked alternately onto the stack surface of the stack base, and a separator is provided therebetween. The separator unwound from the separator roll reaches the stack base via a plurality of rollers. A separator is covered by a pivotal unwinder over the electrode plate placed on the stack side of the stack base. In this way, it is possible to supply the separator rapidly and stably.

The apparatus and method for stacking electrode plates according to an embodiment of the present invention have been described. However, the present invention is not limited to the above-described embodiment, and various modifications and variations can be made by one of ordinary skill in the art to which the present invention belongs without departing from the spirit and spirit of the present invention claimed in the claims.

**EXPLANATION OF REFERENCE NUMBERS**

| | |
|---|---|
| 100: electrode plate stacking apparatus | |
| E1, E2: electrode plate | S: separator |
| 10a-1, 10a-2, 10a-3, 10b-1, 10b-2, 10b-3: belt conveyor | |
| 12: camera | 13: backlight |
| 15a, 15b: pick and place unit (P/P) | 16: vertical actuator |
| 17: horizontal actuator | 18, 18 ', 18 ", 18 "': roller |
| 20: stack base | 22, 22a-1, 22a-2, 22b-1, 22b-2: gripper |
| 25: separator unwinding assembly | |
| 27: roller | 28: arm |
| 29: shaft | 30: driving unit |

## Claims

1. An apparatus for stacking electrode plates for a prismatic secondary battery,
wherein a positive electrode plate and a negative electrode plate are alternately supplied on a stack base while a separator is supplied between the positive electrode plate and the negative electrode plate, comprising:
a separator unwinding assembly configured to cover an electrode plate placed on the stack base with the separator,
wherein the separator unwinding assembly comprises
two or more arms;
a shaft pivotally connected to one end of the arm;
two or more rollers coupled to the other end of the arm; and
an actuator for pivotally moving the arms.

2. The apparatus of claim 1, wherein the two or more rollers are configured to be extended between the other ends of the two or more arms.

3. The apparatus of claim 1, wherein the shaft is arranged below a stack surface of the stack base.

4. The apparatus of claim 1, wherein the two or more rollers are provided with the separator above the stack surface of the stack base and the separator is fed between the two or more rollers.

5. The apparatus of claim 1, wherein the stack base is stationary.

6. A separator unwinding assembly used for an apparatus for stacking electrode plates for a prismatic secondary battery, wherein a positive electrode plate and a negative electrode plate are alternately supplied on a stack base while a separator is supplied between the positive electrode plate and the negative electrode plate, comprising:
two or more arms;
a shaft pivotally connected to one end of the arm;
two or more rollers coupled to the other end of the arm; and
an actuator for pivotally moving the arms,
wherein the assembly is configured to cover an electrode plate placed on the stack base with the separator.

7. The separator unwinding assembly of claim 6, wherein the two or more rollers are configured to be extended between the other ends of the two or more arms.

8. The separator unwinding assembly of claim 6, wherein the shaft is arranged below a stack surface of the stack base.

9. The separator unwinding assembly, wherein the two or more rollers are provided with the separator above the stack surface of the stack base and the separator is fed between the two or more rollers.

10. The separator unwinding assembly of claim 6, wherein the stack base is stationary.

11. A method for stacking electrode plates for a prismatic secondary battery,
wherein a positive electrode plate and a negative electrode plate are alternately supplied on a stack base while a separator is supplied between the positive electrode plate and the negative electrode plate, comprising:
providing a separator onto the stack base with a separator unwinding assembly,
wherein the assembly comprises
two or more arms;
a shaft pivotally connected to one end of the arm;
two or more rollers coupled to the other end of the arm; and
an actuator for pivotally moving the arms,
wherein the two or more arms move pivotally about the shaft by a predetermined angle so that the separator drawn between the two or more rollers covers the electrode plate placed on the stack base.

12. The method of claim 11, wherein the two or more rollers are configured to be extended between the other ends of the two or more arms.

13. The method of claim 11, wherein the shaft is arranged below a stack surface of the stack base.

14. The method of claim 11, wherein the two or more rollers are provided with the separator above the stack surface of the stack base and the separator is fed between the two or more rollers.

15. The method of claim 11, wherein the stack base is stationary.
